# EUROPEAN PATENT APPLICATION

(11) **EP 2 765 450 A1**
(43) Date of publication of application: **13.08.2014**
(21) Application number: 14154529.3
(22) Date of filing: 10.02.2014
(51) Int. Cl.: G02F 1/1333, G06F 3/041

(54) **Display device**

(30) Priority: 08.02.2013 KR 20130014587
(71) Applicant: Samsung Electronics Co., Ltd, Gyeonggi-do 443-742 (KR)
(72) Inventor: Kim, Min-Uk, 443-742 Gyeonggi-do (KR); Kim, Dong-Sub, 443-742 Gyeonggi-do (KR); Kim, Hak-Yeol, 443-742 Gyeonggi-do (KR); Jung, Song-Hee, 443-742 Gyeonggi-do (KR)
(74) Representative: Jenkins, Richard Gavin

(57) **Abstract**

A display device with a touch detector is provided. The display device includes a display layer and a touch unit that includes a retardation layer and a polarizer both provided on top of the display layer, and a touch detector that is located around the retardation layer and that includes at least one electrode made of an opaque metal mesh. The polarizer and the retardation plate (quarter wave plate) acting as anti-reflection layer.

## Description

### TECHNICAL FIELD

The present disclosure relates to a display device. More particularly, the present disclosure relates to a display device capable of enhancing visibility.

### BACKGROUND

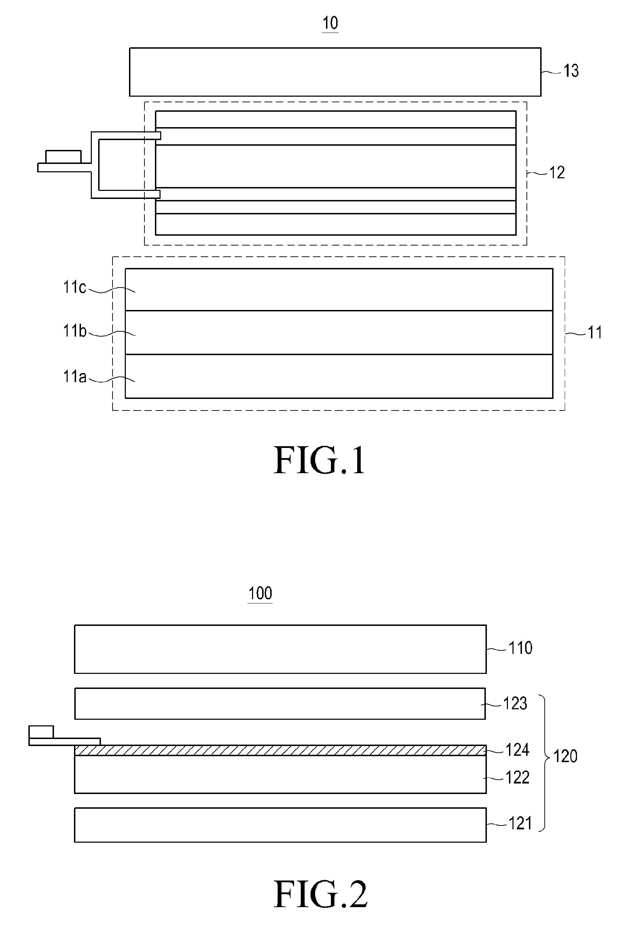

In general, display devices equipped in electronic devices to render images are predominantly implemented as flat-type display devices. Recently, soft flexible display devices that can be bent and folded while allowing the user to retrieve and view information through touches have come into demand and use. Although there is no clear definition about the flexible display device, typically, any display device formed on a flexible substrate can be collectively referred to as the flexible display device. According to the related art, such a flexible display device is manufactured from a bendable substrate such as a plastic substrate, characterized to be bent, folded or even rolled without damage using a flexible and thin sheet-like substrate that is strong (e.g., resistant) against external shocks, flexible, and tough, while also maintaining existing screen properties. Thin Film Transistor Liquid Crystal Display (TFT-LCD), Organic Light Emitting Diode (OLED), or electrophoresis technologies have been predominantly used to implement the flexible display device. The display device often includes a touch screen panel for detecting touches, specifically, a touch screen panel which may be an Indium Tin Oxide film (ITO) panel. A display device of related art will be described below with reference to FIG. 1.

FIG. 1 illustrates a display device according to the related art.

Referring to FIG. 1, a display device 10 includes a display member 11, a touch screen panel 12, and a window 13.

According to the related art, the display member 11 may include a light emitting device 11a, a retardation and polarization layer 11b, and a polarization plate 11c stacked therein. The light emitting device 11a may be a TFT-LCD, an OLED, or the like.

According to the related art, the touch screen panel 12 is generally an ITO panel. The touch screen panel 12 may be configured for detecting touches. The touch screen panel 12 lies on the display member 11.

According to the related art, the window 13 lies on top of the ITO panel 12.

According to the related art, the touch screen panel 12 (e.g., the ITO panel) is a thin film layer made of a transparent ITO film which is often used for a touch screen panel due to the conductivity and transparency of the transparent ITO film. However, the touch screen panel 12 (e.g., the ITO panel) is an oxide semiconductor which has high brittleness. As a result, the use of the touch screen panel 12 (e.g., the ITO panel) to implement a flexible display device is difficult. Furthermore, the touch screen panel 12 (e.g., the ITO panel) has a high resistance compared to a metal product. For example, the touch screen panel 12 (e.g., the ITO panel) typically has a resistance of about 150-200 ohm/square (Ω/square), which may cause significant loss of electrical power. Accordingly, in implementing a large area display device, a problem arises that the display device 10 suffers from rapid consumption of a power source due to the electrical power loss. The power source may be a battery which has limited capacity for power. As a result, rapid consumption of power from the battery may significantly reduce the amount of time that the battery may power the display device 10 and other components to which the battery may be connected. Furthermore, another problem associated with implementing a large area display device is that touch reaction velocity gets slower as the resistance of the touch screen panel 12 (e.g., the ITO panel) increases. In other words, screen buffering that retards screen running may occur. In an effort to address the above-identified problems, implementations to replace the touch screen panel 12 (e.g., the ITO panel) have been developed. However, finding an ideal replacement that satisfies the conductivity and visibility characteristics of the touch screen panel 12 (e.g., the ITO panel) is difficult. In addition, the cost of the ITO films is continuing to rise. Accordingly, finding a replacement for the touch screen panel 12 according to the related art (e.g., the ITO panel) and enhance visibility of the display device is inevitable.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, the present disclosure is to provide a display device which replaces an Indium Tin Oxide film (ITO) panel and enhances visibility.

Another aspect of the present disclosure is to provide a display device which increases touch reaction velocity while reducing power consumption even if the display device is implemented as a large area display device.

Another aspect of the present disclosure is to provide a display device which gets slimmed down and reduces a total weight by replacing the existing ITO panel.

In accordance with an aspect of the present disclosure, a display device is provided. The display device includes a display layer, a display unit that includes a retardation and polarization layer provided on top of the display layer, and a touch detector that is located around the retardation and polarization layer and that includes at least one opaque metal electrode.

In accordance with another aspect of the present disclosure, a display device is provided. The display device includes a display unit that comprises a display layer and a touch detector, wherein the touch detector includes at least one opaque metal electrode, and wherein the touch detector is disposed above the display layer.

Other aspects, advantages, and salient features of the disclosure will become apparent to those skilled in the art from the following detailed description, which, taken in conjunction with the annexed drawings, discloses various embodiments of the present disclosure

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a display device according to the related art;
FIG. 2 is a cross-sectional view of a display device in which a pattern unit of a touch detector is patterned on a top surface of a retardation and polarization layer according to an embodiment of the present disclosure;
FIG. 3 is a schematic exploded view of a display device in which a pattern unit of a touch detector is patterned on a top surface of a retardation and polarization layer according to an embodiment of the present disclosure;
FIG. 4 is a cross-sectional view of a display device in which a pattern unit of a touch detector is patterned on a bottom surface of a retardation and polarization layer according to an embodiment of the present disclosure;
FIG. 5 is a schematic exploded view of a display device in which a pattern unit of a touch detector is patterned on the bottom surface of a retardation and polarization layer according to an embodiment of the present disclosure;
FIG. 6 is a cross-sectional view of a display device in which a pattern unit of a touch detector is patterned on both top and bottom surfaces of a retardation and polarization layer according to an embodiment of the present disclosure;
FIG. 7 is a schematic exploded view of a display device in which a pattern unit of a touch detector is patterned on both top and bottom surfaces of a retardation and polarization layer according to an embodiment of the present disclosure;
FIG. 8 illustrates simplified forms of rays being refracted in a display device according to an embodiment of the present disclosure;
FIG. 9 is a cross-sectional view of a display device having a pattern unit patterned on the top surface of a transparent plate according to an embodiment of the present disclosure;
FIG. 10 is an exploded view of a display device having a pattern unit patterned on a top surface of a transparent plate according to an embodiment of the present disclosure;
FIG. 11 is a cross-sectional view of a display device having a pattern unit patterned on a bottom surface of a transparent plate according to an embodiment of the present disclosure;
FIG. 12 is an exploded view of a display device having a pattern unit patterned on a bottom surface of a transparent plate according to an embodiment of the present disclosure;
FIG. 13 is a cross-sectional view of a display device having a pattern unit patterned on both top and bottom surfaces of a transparent plate according to an embodiment of the present disclosure; and
FIG. 14 is an exploded view of a display device having a pattern unit patterned on both top and bottom surfaces of a transparent plate according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Terms as used in the present disclosure are used to describe the various embodiments of the present disclosure, and are not intended to limit the present disclosure. Singular terms are intended to include plural forms, unless the context makes it clear that plural forms are not intended.

Unless defined differently, all terms used in the present disclosure, including technical or scientific terms, have meanings that are understood generally by a person having ordinary skill in the art. Ordinary terms that may be defined in a dictionary should be understood to have the meaning consistent with their context, and unless clearly defined in the present disclosure, should not be interpreted to be excessively idealistic or formalistic.

According to various embodiments of the present disclosure, an electronic device may include communication functionality. For example, an electronic device may be a smart phone, a tablet Personal Computer (PC), a mobile phone, a video phone, an e-book reader, a desktop PC, a laptop PC, a netbook PC, a Personal Digital Assistant (PDA), a Portable Multimedia Player (PMP), an mp3 player, a mobile medical device, a camera, a wearable device (e.g., a Head-Mounted Device (HMD), electronic clothes, electronic braces, an electronic necklace, an electronic appcessory, an electronic tattoo, or a smart watch), and/or the like.

According to various embodiments of the present disclosure, an electronic device may be a smart home appliance with communication functionality. A smart home appliance may be, for example, a television, a Digital Video Disk (DVD) player, an audio, a refrigerator, an air conditioner, a vacuum cleaner, an oven, a microwave oven, a washer, a dryer, an air purifier, a set-top box, a TV box (e.g., Samsung HomeSync™, Apple TV™, or Google TV™), a gaming console, an electronic dictionary, an electronic key, a camcorder, an electronic picture frame, and/or the like

According to various embodiments of the present disclosure, an electronic device may be a medical device (e.g., Magnetic Resonance Angiography (MRA) device, a Magnetic Resonance Imaging (MRI) device, Computed Tomography (CT) device, an imaging device, or an ultrasonic device), a navigation device, a Global Positioning System (GPS) receiver, an Event Data Recorder (EDR), a Flight Data Recorder (FDR), an automotive infotainment device, a naval electronic device (e.g., naval navigation device, gyroscope, or compass), an avionic electronic device, a security device, an industrial or consumer robot, and/or the like.

According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, an electronic device may be implemented to include a display device.

A display device according to various embodiments of the present disclosure will now be described with reference to accompanying drawings. The display device may replace an existing Indium Tin Oxide film (ITO) panel, thereby increasing touch reaction velocity relative to the ITO panel. In addition, the display device according to various embodiments of the present disclosure may have a flexible structure, and may prevent patterns for touch events from being visible to the user through the screen of the display device. For the purpose of convenience and clarity, sizes and thicknesses of elements may be drawn in exaggerated manners in the drawings. Further, terms, as will be mentioned later, are defined by taking functionalities of the present disclosure into account, but may vary depending on certain practices or intentions of users or operators. Accordingly, the definition of the terms should be made based on the descriptions throughout this specification. It will be understood that, although the terms first, second, third, and the like, may be used herein to describe various elements, components, regions, layers, and/or sections, these elements, components, regions, layers and/or sections should not be limited by these terms.

Various embodiments of the present disclosure provide a display device which allows for touch actions/reactions while providing a flexible structure and which prevents patterns comprised of metal electrodes, which have opaque patterns for implementing touches, from being visible, thereby enhancing visibility, by replacing an existing ITO panel with enhanced configurations or structures.

A display device 100 in accordance with various embodiments of the present disclosure will be described in connection with FIGS. 2 through 14. First, an integration of a touch detector 124 into a display unit 120 in first and second embodiments of the present disclosure is described. However, according to various embodiments of the present disclosure, the touch detector 124 is not limited by the disclosure thereof. According to various embodiments of the present disclosure, the touch detector 124 is laminated with elements of the display unit 120. According to various embodiments of the present disclosure, various modifications to the formation of the touch detector 124 may be made. For example, the touch detector 124 may be integrally patterned on an element of the display unit 120, may be laminated between some elements of the display unit 120, or the like.

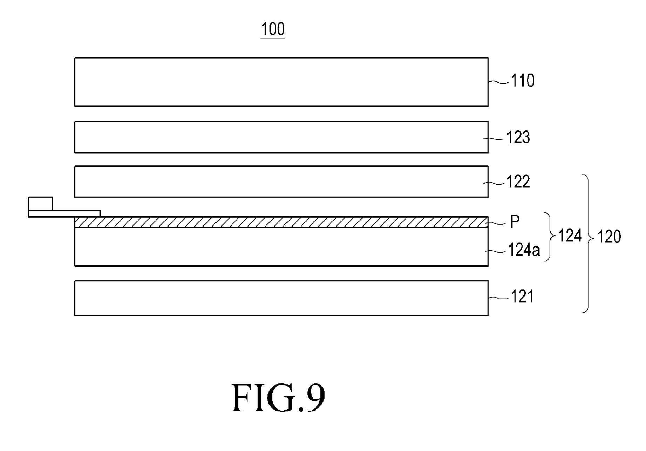

FIGS. 2 to 7 illustrate the first embodiment of the present disclosure in which, briefly, the touch detector 124 is integrally patterned on the display unit 120, more specifically on a retardation and polarization layer according to an embodiment of the present disclosure. FIGS. 9 to 14 illustrate the second embodiment of the present disclosure in which, a separate transparent plate, on which a pattern unit is patterned, is provided between a display layer and the retardation and polarization layer in the display unit according to an embodiment of the present disclosure. The same configurations, formations, structures, reference numerals, and/or the like, used for describing the first embodiment of the present disclosure will also be applied to the second embodiment.

The display device 100 according to the first embodiment of the present disclosure will now be described with reference to FIGS. 2 to 7.

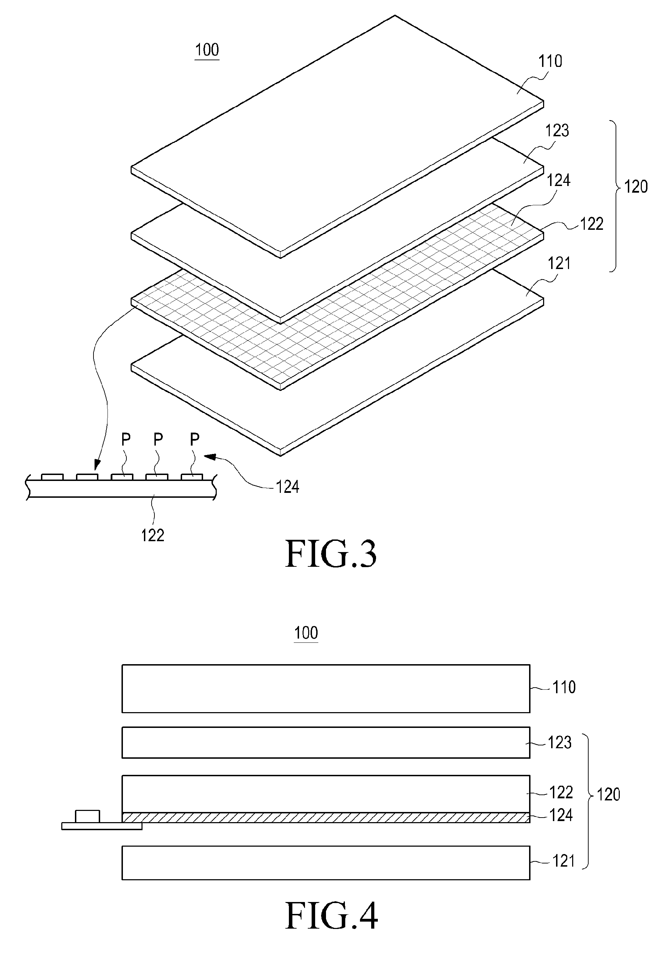

FIG. 2 is a cross-sectional view of a display device in which a pattern unit of a touch detector is patterned on a top surface of a retardation and polarization layer according to an embodiment of the present disclosure. FIG. 3 is a schematic exploded view of a display device in which a pattern unit of a touch detector is patterned on a top surface of a retardation and polarization layer according to an embodiment of the present disclosure. For example, FIGS. 2 and 3 are cross-sectional and schematic exploded views of the display device 100 in which the pattern unit of the touch detector 124 is patterned on the top surface of a retardation and polarization layer 122 according to the first embodiment of the present disclosure.

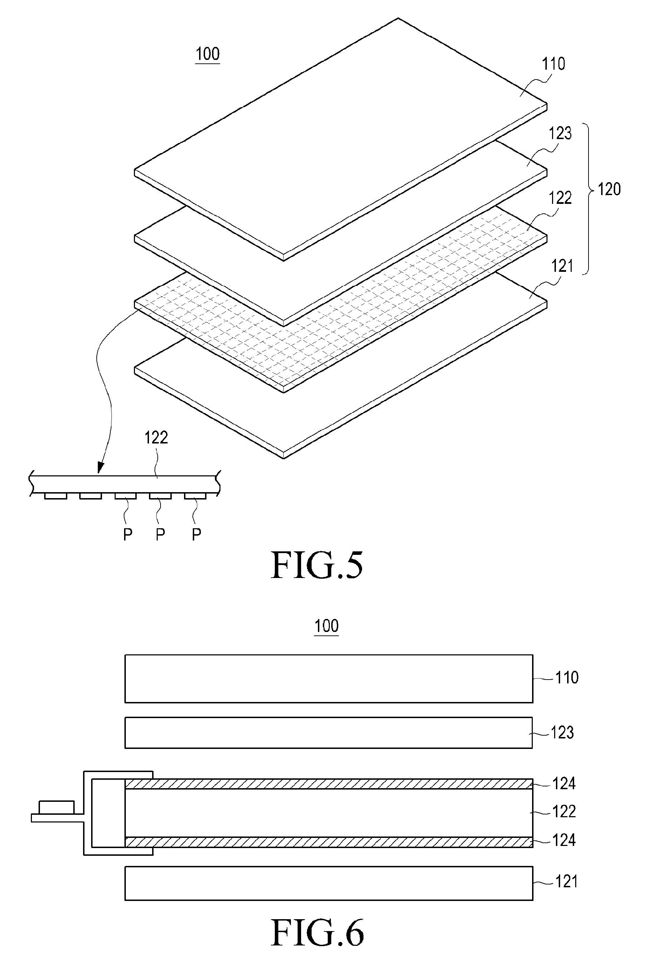

FIG. 4 is a cross-sectional view of a display device in which a pattern unit of a touch detector is patterned on a bottom surface of a retardation and polarization layer according to an embodiment of the present disclosure. FIG. 5 is a schematic exploded view of a display device in which a pattern unit of a touch detector is patterned on the bottom surface of a retardation and polarization layer according to an embodiment of the present disclosure. For example, FIGS. 4 and 5 are cross-sectional and schematic exploded views of the display device 100 in which the pattern unit of the touch detector 124 is patterned on the bottom surface of the retardation and polarization layer 122 according to the first embodiment of the present disclosure.

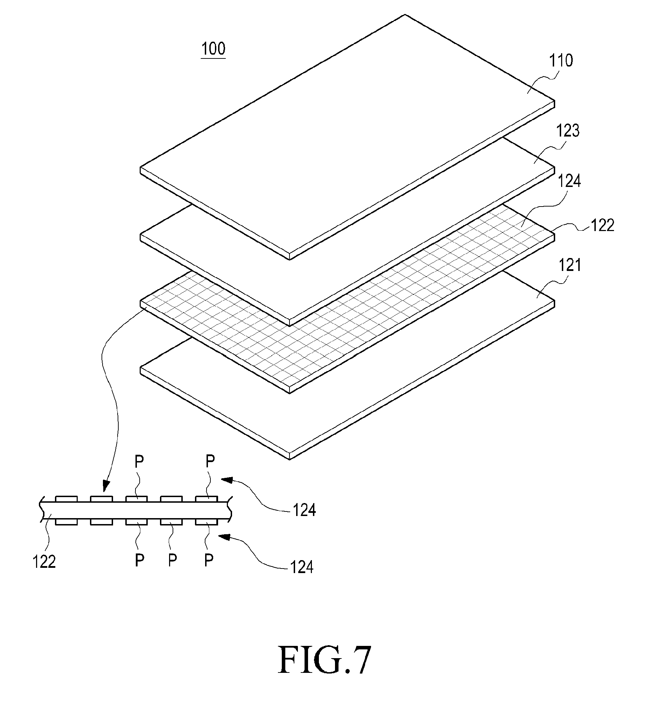

FIG. 6 is a cross-sectional view of a display device in which a pattern unit of a touch detector is patterned on both top and bottom surfaces of a retardation and polarization layer according to an embodiment of the present disclosure. FIG. 7 is a schematic exploded view of a display device in which a pattern unit of a touch detector is patterned on both top and bottom surfaces of a retardation and polarization layer according to an embodiment of the present disclosure. FIGS. 6 and 7 are cross-sectional and schematic exploded views of the display device 100 in which the pattern unit of the touch detector 124 is patterned on both top and bottom surfaces of the retardation and polarization layer 122, according to the first embodiment of the present disclosure.

As illustrated in FIGS. 2 to 7, the touch detector 124 may be patterned on different positions of the retardation and polarization layer.

Referring to FIGS. 2 to 7, the display device 100 includes the display unit 120 which integrates the touch detector 124, and a window 110 that lies on (e.g., that is disposed on) the display unit 120. In contrast to the display device 10 according to the related art, the display device 100 of the first embodiment of the present disclosure has a different assembly structure. Specifically, the display device 100 according to various embodiments of the present disclosure has a difference in the assembly structure of the display unit 120. For example, the assembly structure of the display unit 120 according to various embodiments of the present disclosure eliminates a touch screen panel including an ITO panel from between the window 110 and the display unit 120. Instead, a window 110 is directly provided on top of the display unit 120. Such an assembly structure may reduce a thickness of the display device 100 and thus reduce the weight of the display device 100.

The display unit 120 has a structure in which the retardation and polarization layer 122, the touch detector 124, and the polarization plate 123 are stacked in order as a single unit with a display layer 121 as a base. According to various embodiments of the present disclosure, the touch detector 124 is formed between the retardation and polarization layer 122. According to various embodiments of the present disclosure, the retardation and polarization layer 122 lies on the display layer 121 and the polarization plate 123.

The display layer 121 may be formed of a Thin Film Transistor Liquid Crystal Display (TFT-LCD), Organic Light Emitting Diode (OLEDs), Active Matrix Organic Light Emitting Diodes (AMOLEDs), and/or the like. However, the display layer 121 is not limited to such display types. For example, not only TFT-LCD, OLEDs, AMOLEDs, or the like, but also any modifications thereof may be used for the display layer 121 as long as such modifications may display screens.

The polarization plate 123 sits atop the display unit 120 and lies under the window 110. The polarization plate 123 is a device for obtaining linear polarized light from incident polarized transmitted light. A coated film (not shown) for suppressing reflection or preventing light scattering or surface reflection may be integrally laminated on the polarization plate 123, and the coated film may include at least one of Anti-Reflective (AR), Low Reflective (LR), Anti-Glare (AG) films, and/or the like. However, according to various embodiments of the present disclosure, the coated film laminated on the polarization plate 123 is not limited to the above-identified materials. For example, any modification or combinations thereof may also be used by factoring in light scattering, refraction, reflection, and/or the like. According to various embodiments of the present disclosure (e.g., the first embodiment of the present disclosure), the touch detector 124 has a pattern unit P directly patterned on the retardation and polarization layer 122 in an integrated form. In contrast, according to various embodiments of the present disclosure (e.g., the second embodiment of the present disclosure), the touch detector 124 may have a separate transparent plate 124a, on which the pattern unit P is patterned, between the display layer 121 and the retardation and polarization layer 122, which will be described later. According to various embodiments of the present disclosure (e.g., the first embodiment of the present disclosure), the touch detector 124 may be located around the retardation and polarization layer 122. Specifically, the touch detector 124 may have the pattern unit P integrally patterned on the retardation and polarization layer 122. More specifically, the pattern unit P is patterned on any of the top surface (e.g., as illustrated in FIGS. 2 and 3), bottom surface (e.g., as illustrated in FIGS. 4 and 5), and both top and bottom surfaces of the retardation and polarization layer 122.

According to various embodiments of the present disclosure, the pattern unit P may include opaque metal electrodes, such as a metal mesh, a nano mesh, a metal wire mesh, a nano wire mesh, and/or the like. The metal mesh, nano mesh, metal wire mesh, or nano wire mesh is made of conductible metal, such as silver, carbon steel, graphene, aluminum, copper, or the like. Various embodiments of the present disclosure are not limited in the material of the metal mesh, nano mesh, metal wire mesh, or nano wire mesh. According to various embodiments of the present disclosure, it may be preferable that the metal mesh, nano mesh, metal wire mesh, or nano wire mesh can form a pattern with electrical conductivity, low resistance, allowing for touch detection.

As such, the pattern unit P may be laminated between the display layer 121 and the polarization plate 123 by being integrally patterned on the retardation and polarization layer 122. According to various embodiments of the present disclosure, the display device 100 has the retardation and polarization unit 122, on top of which the pattern unit P is integrally patterned, laminated upon the display layer 121, and the polarization plate 123 laminated upon the retardation and polarization unit 122. Specifically, as illustrated in FIGS. 2 and 3, according to which the pattern unit P is integrally patterned on the top surface of the retardation and polarization layer 122, the display device may have an assembly structure of the display layer 121, the retardation and polarization layer 122, the pattern unit P, the polarization plate 123, and the window 110 stacked up in order. However, as illustrated in FIGS. 4 and 5, according to which the pattern unit P is integrally patterned on the bottom surface of the retardation and polarization layer 122, the display device may have an assembly structure of display layer 121, the pattern unit P, the retardation and polarization layer 122, the polarization plate 123 and the window 110 stacked up in order. Furthermore, as illustrated in FIGS. 6 and 7, according to which the pattern unit P is integrally patterned on both top and bottom surfaces of the retardation and polarization layer 122, the display device 100 may have an assembly structure of the display layer 121, the pattern unit P, the retardation and polarization layer 122, the pattern unit P, the polarization plate 123 and the window 110 stacked up in order.

According to various embodiments of the present disclosure, assume that the retardation and polarization layer 122, on which the pattern unit P is patterned, is a λ/4 film which may be made of at least one of PolyCarbonate (PC), Polyethylene Terephthalate (PET), Cyclo Olefin Polymer (COP), Cyclo Olefin Copolymere (COC) and Olefin. However, according to various embodiments of the present disclosure, the retardation and polarization layer 122 is not limited to the λ/4 film or the aforementioned materials. For example, the retardation and polarization layer 122 may be modified to be a λ/2 film rather than the λ/4 film, depending on the structure of the display layer 121 has or the assembly structure of the display unit 120. Furthermore, materials of the retardation and polarization layer 122 have no limitation as long as the material allows the pattern unit P to be patterned on the retardation and polarization layer 122 and helps to enhance a viewing angle property of light.

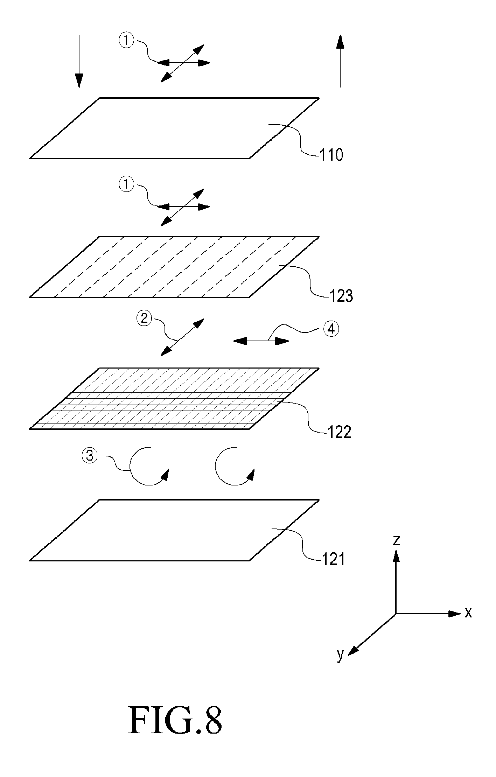

FIG. 8 illustrates simplified forms of rays being refracted in a display device according to an embodiment of the present disclosure.

Referring to FIG. 8, the pattern unit P is inevitably visible to the user due to light reflection and scattering because the pattern unit P is made of a nano mesh, metal mesh, nano wire mesh, or metal wire mesh of a type of opaque metal, such as silver, carbon steel, graphene, copper or aluminum. However, by integrally patterning such a pattern unit P on the display unit 120, light reflection or scattering on the pattern unit P may be prevented and thus the pattern unit P may not be visible to the user. Specifically, because the polarization plate 123 and the retardation and polarization layer 122 have plate-shaped structures that penetrate fluctuating light in one direction, natural light that is transmitted through the window 110 is reflected and scattered on the polarization plate 123, the retardation and polarization layer 122, the display layer 121, the retardation and polarization layer 122, and the polarization plate 123 in order, thus preventing the pattern unit P being visible to the user. More specifically, horizontal and vertical natural light ① (e.g., in this embodiment of the present disclosure, linear polarized light along the XY-axis) is penetrated through the window 110 to the polarization plate 123, and the light ① is changed into one direction light ② (e.g., light along Y-axis in the embodiment of the present disclosure) while passing through the polarization plate 123 to the retardation and polarization layer 122. The one direction light ② is changed into circular polarized light as indicated by ③ while passing through the retardation and polarization layer 122, and the circular polarized light ③ is reflected on the display layer 121. The reflected light against the display layer 121 may have the same form as the light ③, which is changed into light in one direction perpendicular to the direction of the light ②, as indicated by ④ (e.g., light along the X-axis in the embodiment of the present disclosure). As the light ④ cannot pass the polarization plate 123 that has one directivity, specifically, Y-axis directivity, the opaque pattern unit P patterned on the retardation and polarization layer 122 are hardly visible to the user, which enhanced visibility of the display device 100. The same is true for a display device according to the second embodiment of the present disclosure. As a result, the elements and reference numerals thereof used for the first embodiment of the present disclosure will be applied for the second embodiment of the present disclosure.

A display device according to the second embodiment of the present disclosure will now be described with reference to FIGS. 9 to 14, in which a touch detector, specifically, a transparent plate, on which a pattern unit is integrally patterned, is integrally laminated on a display unit.

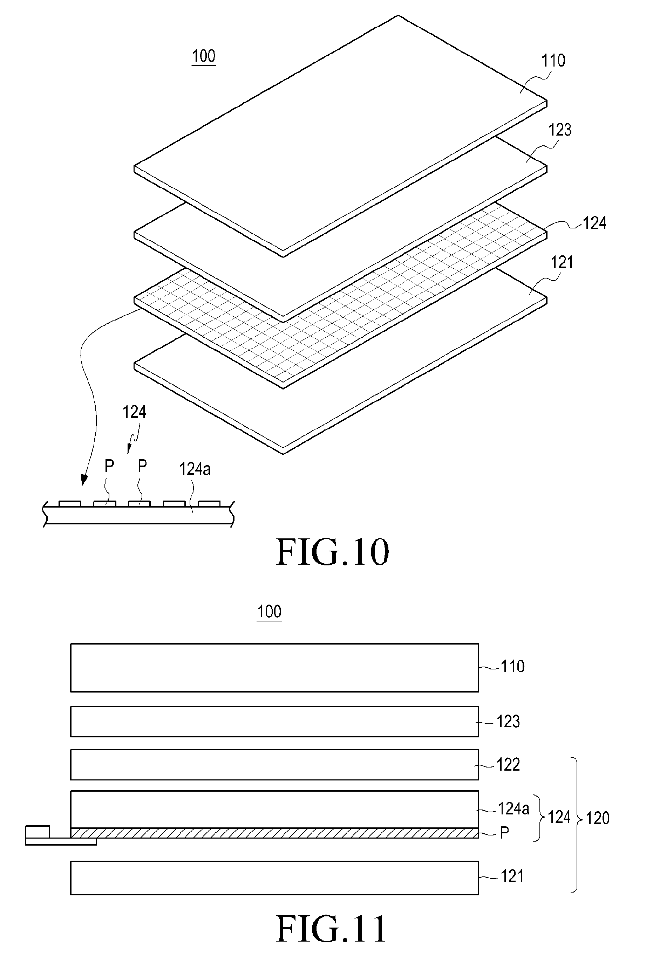

FIG. 9 is a cross-sectional view of a display device having a pattern unit patterned on the top surface of a transparent plate according to an embodiment of the present disclosure. FIG. 10 is an exploded view of a display device having a pattern unit patterned on a top surface of a transparent plate according to an embodiment of the present disclosure. For example, FIGS. 9 and 10 are cross-sectional and exploded views of a display device having a pattern unit patterned on the top surface of a transparent plate, according to the second embodiment of the present disclosure.

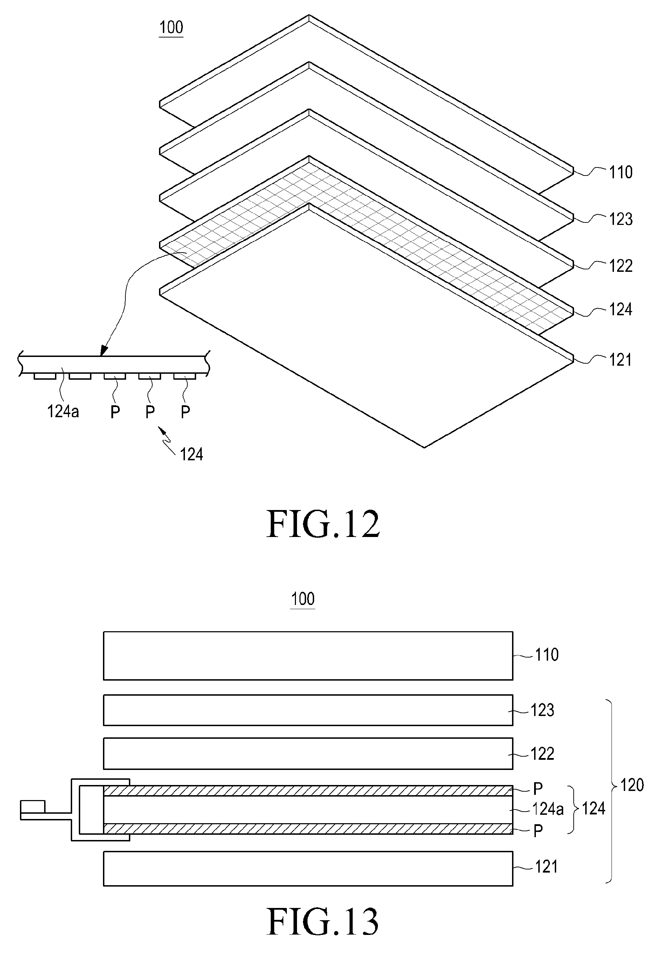

FIG. 11 is a cross-sectional view of a display device having a pattern unit patterned on a bottom surface of a transparent plate according to an embodiment of the present disclosure. FIG. 12 is an exploded view of a display device having a pattern unit patterned on a bottom surface of a transparent plate according to an embodiment of the present disclosure. For example, FIGS. 11 and 12 are cross-sectional and exploded views of a display device having a pattern unit patterned on the bottom surface of a transparent plate, according to the second embodiment of the present disclosure.

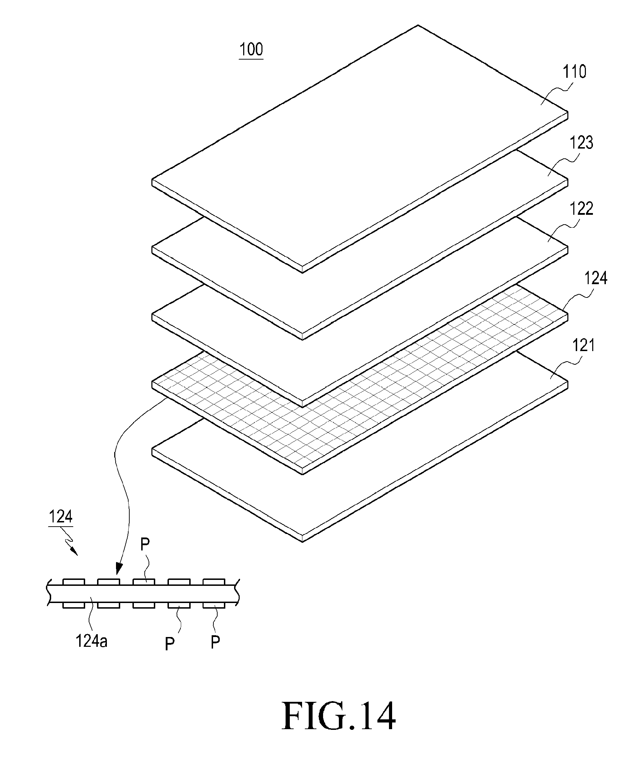

FIG. 13 is a cross-sectional view of a display device having a pattern unit patterned on both top and bottom surfaces of a transparent plate according to an embodiment of the present disclosure. FIG. 14 is an exploded view of a display device having a pattern unit patterned on both top and bottom surfaces of a transparent plate according to an embodiment of the present disclosure. For example, FIGS. 13 and 14 are cross-sectional and exploded views of a display device having a pattern unit patterned on both top and bottom surfaces of a transparent plate, according to the second embodiment of the present disclosure.

Referring to FIGS. 9 to 14, the display device 100 having the touch detector 124 in accordance with the second embodiment of the present disclosure has a difference in patterning position in contrast to the touch detector 124 of the first embodiment of the present disclosure. Specifically, according to the first embodiment of the present disclosure, a pattern unit P is integrally patterned on the top surface, the bottom surface, or both top and bottom surfaces of an element of the display unit 120, which may be the retardation and polarization layer 122. However, according to the second embodiment of the present disclosure, although the touch detector 124 is located around the retardation and polarization layer 122, the touch detector 124 may be integrally configured in the display unit 120 by having a separate transparent plate 124a, on which the pattern unit P is patterned, laminated between the retardation and polarization layer 122 and the display layer 121. Descriptions of other structures of the display device 100 of the first embodiment of the present disclosure shall apply in the second embodiment of the present disclosure.

According to various embodiments of the present disclosure (e.g., the second embodiment of the present disclosure), the touch detector 124 may be disposed (e.g., sit) between the retardation and polarization layer 122 and the display layer 121, and may include the transparent plate 124a, on which pattern unit P is integrally patterned. In relation to the assembly of the display device 100 with the touch detector 124, a display layer 121 is disposed (e.g., sits) in the bottom as a base, the touch detector 124, specifically, the transparent plate 124a, on which the pattern unit P is patterned, is stacked on the display layer 121, the retardation and polarization layer 122 and the polarization plate 123 are stacked in order on the touch detector 124, and the window 110 is stacked on the polarization plate 123.

According to various embodiments of the present disclosure, the pattern unit P may be integrally patterned on the top surface (e.g., as illustrated in FIGS. 9 and 10), the bottom surface (e.g., as illustrated in FIGS. 11 and 12), and both top and bottom surfaces (e.g., as illustrated in FIGS. 13 and 14) of the transparent plate 124a.

According to various embodiments of the present disclosure, the pattern unit P may be opaque metal electrodes having at least one of patterns, such as a metal mesh, a nano mesh, a metal wire mesh, and a nano wire mesh, made of a conductive material including a metal, such as silver, carbon steel, graphene, copper, aluminum, or the like. The transparent plate 124a, on which such a pattern unit P is patterned, is provided between the display layer 121 and the retardation and polarization layer 122. According to various embodiments of the present disclosure, the transparent plate 124a may be made of either a rigid material such as a glass or plastics, or a flexible material such as a film. For example, a flexible film may include at least one of PC, PET, COP, COC, and olefin. However, various embodiments of the present disclosure are not limited in relation to the material for the transparent plate 124a. For example, according to various embodiments of the present disclosure, it may preferable that the material for the transparent plate 124a help enhance a viewing angle property of the opaque metal-based pattern unit P due to light reflection or scattering.

According to various embodiments of the present disclosure (e.g., the first and second embodiments of the present disclosure), the display device 100 has a different assembly structure than a display device according to the related art as a result of integrating the touch detector 124 into the display unit 120 (e.g., integrally laminating the touch device 124 on the display unit 120). For example, according to various embodiments of the present disclosure, the display unit 120 has a different assembly structure compared with a display unit according to the related art, and the display unit 120 may be assembled so as to be thin (e.g., in relation to a display unit according to the related art) because the assembly of the display unit may leave out a touch screen panel including an ITO panel which may otherwise be provided on top of the display unit.

In addition, patterning the pattern unit P of a nano mesh, metal mesh, nano wire mesh, or metal wire mesh on top, bottom, both top and bottom of the retardation and polarization layer 122 or the transparent plate 124a may increase touch reaction velocity and enable multi-touch events.

Furthermore, as to the biggest challenge in securing visibility for the pattern unit P of the nano mesh, metal mesh, nano wire mesh, or metal wire mesh not to be revealed to the user, the display device 100 according to various embodiments of the present disclosure may enhance visibility of the display device 100 by patterning the pattern unit P on a surface of the retardation and polarization layer 122 or laminating the transparent plate 124a, on which the pattern unit P is patterned, between the display layer 121 and the retardation and polarization layer 122 to control the refraction of rays (e.g., to control light scattering or reflection), thus enhancing the viewing angle property of the display unit 120.

The display device 100 replaces an existing touch screen panel comprised of an ITO panel with the pattern unit P of the nano mesh, metal mesh, nano wire mesh, or metal wire mesh by locating the pattern unit P around the retardation and polarization layer in particular, and thus gets slimmed down.

Because the nano mesh, metal mesh, nano wire mesh, or metal wire mesh has little resistance per an area (Ω/square) compared with the ITO panel, the display device 100 may have higher touch reaction velocity and may be implemented as a large area display device.

Furthermore, by locating an opaque pattern unit of the nano mesh, metal mesh, nano wire mesh, or metal wire mesh around the retardation and polarization layer 122, the pattern unit may not be visible to the user and thus visibility of the display device 100 may be enhanced.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A display device comprising:
a display layer(121);
a display unit(120) that includes a retardation and polarization layer(122) provided on top of the display layer(121); and
a touch detector(124) that is located around the retardation and polarization layer(122), and that includes at least one opaque metal electrode.

2. The display device of claim 1, wherein the touch detector(124) has a pattern unit(P) patterned on a side of the retardation and polarization layer(122).

3. The display device of claim 2, wherein the pattern unit(P) is patterned on at least one of top surface, bottom surface, both top and bottom surfaces of the retardation and polarization layer(122).

4. The display device of claim 1, wherein the pattern unit(P) includes a metal mesh, nano mesh, metal wire mesh, or nano wire mesh.

5. The display device of claim 4, wherein the metal mesh or nano mesh includes at least one of silver, copper, aluminum, carbon steel and graphene.

6. The display device of claim 1, wherein the touch detector(124) comprises:
a transparent plate(124a) that is disposed between the display layer(121) and the retardation and polarization layer(122); and
a pattern unit(P) patterned on the transparent plate(124a).

7. The display device of claim 6, wherein the transparent plate(124a) includes at least one of a glass, plastics, and a film, and wherein the transparent plate(124a) includes a film, and
wherein the film includes at least one of polycarbonate, polyethylene terephthalate, cyclo olefin polymer, cyclo olefin copolymere, or olefin.

8. The display device of claim 6, wherein the pattern unit(P) is patterned on at least one of a top surface of the transparent plate(124a), a bottom surface of the transparent plate(124a), and both the top and the bottom surfaces of the transparent plate(124a).

9. The display device of claim 6, wherein the pattern unit(P) includes a metal mesh, nano mesh, metal wire mesh, or nano wire mesh.

10. The display device of claim 9, wherein the metal mesh or nano mesh includes at least one of silver, copper, aluminum, carbon steel and graphene.

11. The display device of claim 1, wherein the display layer(121) comprises a Thin Film Transistor Liquid Crystal Display (TFT-LCD).

12. The display device of claim 1, wherein the display layer(121) comprises an Organic Light Emitting Diode (OLED).

13. The display device of claim 1, wherein the display layer(121) comprises an Active Matrix Organic Light Emitting Diode (AMOLED).

14. The display device of claim 1, wherein the retardation and polarization layer(122) comprises a λ/4 film.

15. The display device of claim 14, wherein the λ/4 film comprises at least one of polycarbonate, polyethylene terephthalate, cyclo olefin polymer, cyclo olefin copolymere, or olefin.
